(19) Europäisches Patentamt
European Patent Office
Office européen des brevets

(11) **EP 4 750 210 A1**

(12) **EUROPEAN PATENT APPLICATION**
published in accordance with Art. 153(4) EPC

(43) Date of publication:
**27.05.2026 Bulletin 2026/22**

(21) Application number: **23946110.6**

(22) Date of filing: **21.07.2023**

(51) International Patent Classification (IPC):
**H04W 74/04** (2009.01)

(52) Cooperative Patent Classification (CPC):
**H04W 72/0446; H04W 72/23; H04W 74/00;
H04W 74/04**

(86) International application number:
**PCT/CN2023/108763**

(87) International publication number:
**WO 2025/020016 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **LUO, Xingyi
Beijing 100085 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **UPLINK COMMUNICATION METHOD AND APPARATUS, DEVICE, AND STORAGE MEDIUM**

(57)    The present disclosure relates to an uplink communication method and apparatus, a device, and a storage medium. The uplink communication method comprises: receiving first information sent by a serving cell, the first information being used for instructing a terminal to access a target cell; and sending second information on the basis of a first resource, wherein the second information is used for indicating that the terminal has accessed the target cell, and the first resource is a time-frequency resource allocated by the target cell to the terminal and used for transmitting the second information. According to the present disclosure, the terminal sends a message to the target cell on the basis of the first resource, so that the target cell determines that the target cell can communicate with the terminal. Therefore, the cell handover efficiency of the terminal is improved, and the handover time delay is reduced.

```
Terminal          Second            First network
                  network device    device

S2101, sending first information

(e.g., a cell switch signaling)

                  S2102, sending second
                  information based on the first
                  resource

                  (e.g., a switch complete message)
```

FIG. 2

## Description

### TECHNICAL FIELD

The disclosure relates to the field of communication technology, specifically to an uplink communication method, an apparatus, a device and a storage medium.

### BACKGROUND

Layer 1/layer 2 (L1/L2)-based inter-cell mobility (LTM) management can reduce the time overhead of switch. For example, a network device maintains a plurality of candidate cells for a terminal. As the terminal moves, beam measurement results reported by the terminal change. The network device determines whether a cell switch is required based on the beam measurement results reported by the terminal. When the cell switch is required, one cell is selected from the plurality candidate cells as a target cell, and the network device triggers the terminal to switch to the target cell via a cell switch signaling. To further reduce the switch latency, consideration is given to supporting LTM without a random access procedure, i.e., measuring a timing advance (TA) from the user to each candidate cell in advance.

### SUMMARY

In the scenario of a cell switch for LTM without a random access procedure, it is currently unclear how to allocate a resource for a terminal to send information to a target cell for transmitting a determination message/access message.
Embodiments of the disclosure provide an uplink communication method, an apparatus, a device and a storage medium.
According to a first aspect of the embodiments of the disclosure, an uplink communication method is provided, and the method includes: receiving first information sent by a serving cell, in which the first information is configured to instruct a terminal to access a target cell; and sending second information based on a first resource, in which the second information indicates that the terminal accesses the target cell, and the first resource is a time-frequency resource allocated by the target cell to the terminal for sending the second information.
According to a second aspect of the embodiments of the disclosure, an uplink communication method is provided, and the method includes: receiving second information based on a first resource, in which the second information indicates that a terminal accesses a target cell, and the first resource is a time-frequency resource allocated by the target cell to the terminal for sending the second information.
According to a third aspect of the embodiments of the disclosure, an uplink communication method is provided, and the method includes: sending first information to a terminal, in which the first information is configured to instruct the terminal to access a target cell, second information is transmitted between the terminal and the target cell via a first resource, the second information indicates that the terminal accesses the target cell, and the first resource is a time-frequency resource allocated by the target cell to the terminal for transmitting the second information.
According to a fourth aspect of the embodiments of the disclosure, an uplink communication method is provided, and the method includes: a serving cell sending first information to a terminal, in which the first information is configured to instruct a terminal to access a target cell; the terminal receiving the first information sent by the serving cell; the terminal sending second information to the target cell based on a first resource, in which the second information indicates that the terminal accesses the target cell, and the first resource is a time-frequency resource allocated by the target cell to the terminal for sending the second information; and the target cell receiving the second information based on the first resource.
According to a fifth aspect of the embodiments of the disclosure, a terminal is provided, including: a transceiving module, configured to receive first information sent by a serving cell, in which the first information is configured to instruct a terminal to access a target cell. The transceiving module is further configured to send second information based on a first resource, in which the second information indicates that the terminal accesses the target cell, and the first resource is a time-frequency resource allocated by the target cell to the terminal for sending the second information.
According to a sixth aspect of the embodiments of the disclosure, a first network device is provided, including: a transceiving module, configured to receive second information based on a first resource, in which the second information indicates that a terminal accesses a target cell, and the first resource is a time-frequency resource allocated by the target cell to the terminal for sending the second information.
According to a seventh aspect of the embodiments of the disclosure, a second network device is provided, including: a transceiving module, configured to send first information to a terminal, in which the first information is configured to instruct the terminal to access a target cell, second information is transmitted between the terminal and the target cell via a first resource, the second information indicates that the terminal accesses the target cell, and the first resource is a time-frequency resource allocated by the target cell to the terminal for transmitting the second information.

According to an eighth aspect of the embodiments of the disclosure, a terminal is provided. The terminal includes: one or more transceivers; one or more processors; and one or more memories configured to store one or more computer programs, in which the one or more computer programs include instructions that, when executed by the one or more processors of the terminal, cause the terminal to perform the uplink communication method according to the first aspect and any one of the implementations of the first aspect.

According to a ninth aspect of the embodiments of the disclosure, a first network device is provided. The first network device includes: one or more transceivers; one or more processors; and one or more memories configured to store one or more computer programs, where the one or more computer programs include instructions that, when executed by the one or more processors of the first network device, cause the first network device to perform the uplink communication method according to the second aspect and any one of the implementations of the second aspect.

According to a tenth aspect of the embodiments of the disclosure, a second network device is provided. The second network device includes: one or more transceivers; one or more processors; and one or more memories configured to store one or more computer programs, where the one or more computer programs include instructions that, when executed by the one or more processors of the second network device, cause the second network device to perform the uplink communication method according to the third aspect and any one of the implementations of the third aspect.

According to an eleventh aspect of the embodiments of the disclosure, a communication system is provided. The communication system includes a terminal, a first network device, and a second network device, where the terminal is configured to implement the uplink communication method according to the first aspect and any one of the implementations of the first aspect, the first network device is configured to implement the uplink communication method according to the second aspect and any one of the implementations of the second aspect, and the second network device is configured to implement the uplink communication method according to the third aspect and any one of the implementations of the third aspect.

According to a twelfth aspect of the embodiments of the disclosure, a storage medium is provided. The storage medium stores instructions that, when run on a communication device, cause the communication device to perform the uplink communication method according to the first aspect and any one of the implementations of the first aspect, or the second aspect and any one of the implementations of the second aspect, or the third aspect and any one of the implementations of the third aspect.

In the disclosure, the terminal sends a message to the target cell based on the first resource, so that the target cell determines that the target cell can communicate with the terminal, improving an efficiency of the cell switch for the terminal and reducing a switch latency.

## BRIEF DESCRIPTION OF THE DRAWINGS

To more clearly illustrate the technical solutions in the embodiments of the disclosure, the accompanying drawings required for describing the embodiments are introduced below. The following accompanying drawings are merely some embodiments of the disclosure and do not impose any specific limitation on the protection scope of the disclosure.

FIG. 1a is a schematic diagram of a communication system according to an embodiment.
FIG. 1b is a schematic diagram of a terminal movement scenario according to an embodiment.
FIG. 1c is a schematic interaction diagram of a cell switch signaling according to an embodiment.
FIG. 2 is a schematic interaction diagram of an uplink communication method according to an embodiment.
FIG. 3 is a flowchart of an uplink communication method according to an embodiment.
FIG. 4 is a flowchart of an uplink communication method according to another embodiment.
FIG. 5 is a flowchart of an uplink communication method according to yet another embodiment.
FIG. 6 is a schematic diagram of a time-domain offset according to an embodiment.
FIG. 7a is a schematic diagram of an uplink communication apparatus according to an embodiment.
FIG. 7b is a schematic diagram of an uplink communication apparatus according to another embodiment.
FIG. 7c is a schematic diagram of an uplink communication apparatus according to yet another embodiment.
FIG. 8a is a schematic diagram of a communication device according to an embodiment.
FIG. 8b is a schematic diagram of a chip according to an embodiment.

## DETAILED DESCRIPTION

Embodiments of the disclosure provide an uplink communication method, an apparatus, a device, and a storage medium.

According to a first aspect of the embodiments of the disclosure, a uplink communication method is provided, and the method includes: receiving first information sent by a serving cell, in which the first information is configured to instruct a terminal to access a target cell; and sending second information based on a first resource, in which the second information indicates that the terminal accesses the target cell, and the first resource is a time-frequency resource allocated by the target cell to the terminal for sending the second information.

It can be seen that during a cell switch, the terminal may send the second information to the target cell based on the pre-allocated first resource to inform the target cell of the terminal's access to the target cell. In this way, the terminal does not need to perform uplink synchronization with the target cell via a random access channel (RACH), thereby reducing a latency of the terminal switching to the target cell. In addition, since the terminal may inform the target cell of the terminal's access to the target cell without using the RACH, the terminal may adopt a method of obtaining a timing advance (TA) of the target cell in advance for the cell switch, thereby improving an efficiency of the cell switch for the terminal.

In combination with some embodiments in the first aspect, the first resource includes at least one of: a scheduling request (SR) resource corresponding to the target cell; a configured grant (CG) physical uplink shared channel (PUSCH) resource of the target cell; a semi-persistent sounding reference signal (SRS) resource corresponding to the target cell; a PUSCH resource of the target cell scheduled by the first information; or a PUSCH resource scheduled based on a physical downlink control channel (PDCCH) sent by the target cell.

In the above embodiment, the disclosure provides a plurality of possible forms of the first resource, to be applicable to sending messages to the target cell based on an appropriate first resource in various scenarios. This enables the target cell to determine that the target cell can communicate with the terminal, improves the efficiency of the cell switch for the terminal, and reduces a switch latency.

In combination with some embodiments in the first aspect, the method further includes: receiving third information, in which the third information is used to configure the first resource, and the first resource is the SR resource corresponding to the target cell.

In the above embodiment, the SR resource corresponding to the target cell is configured via the third information, so that the terminal sends the second information based on the resource. This enables the target cell to determine that the target cell can communicate with the terminal, improves the efficiency of the cell switch for the terminal, and reduces the switch latency.

In combination with some embodiments in the first aspect, the first information is further used to configure and activate the CG PUSCH resource.

In the above embodiment, the first information may be used to directly configure and activate the first resource, so that the terminal sends the second information based on the resource. This enables the target cell to determine that the target cell can communicate with the terminal, improves the efficiency of the cell switch for the terminal, and reduces the switch latency.

In combination with some embodiments in the first aspect, the first information is further used to activate the CG PUSCH resource, and the method further includes: receiving fourth information, in which the fourth information is used to configure the CG PUSCH resource.

In the above embodiment, the first resource may be configured via the fourth information and activated via the first information, so that the terminal sends the second information based on the resource. This enables the target cell to determine that the target cell can communicate with the terminal, improves the efficiency of the cell switch for the terminal, and reduces the switch latency.

In combination with some embodiments in the first aspect, a starting time-domain position of the first resource is determined based on a time-domain offset and a time-domain position at which the first information is received, in which the first resource is the PUSCH resource of the target cell scheduled by the first information.

In the above embodiment, the disclosure provides a method for determining the starting time-domain position of the first resource, so that the terminal sends the second information based on the resource at the corresponding time-domain position. This enables the target cell to determine that the target cell can communicate with the terminal, improves the efficiency of the cell switch for the terminal, and reduces the switch latency.

In combination with some embodiments in the first aspect, the time-domain offset is determined based on at least one of: a predefined rule; or being configured by a network device, in which the network device includes a network device corresponding to the serving cell.

In the above embodiment, a plurality of configuration modes of the time-domain offset are provided, thereby ensuring that in different scenarios, the resource for sending the second information is determined based on the time-domain offset, and the second information is sent based on the resource. This enables the target cell to determine that the target cell can communicate with the terminal, improves the efficiency of the cell switch for the terminal, and reduces the switch latency.

In combination with some embodiments in the first aspect, the PDCCH is sent by the target cell after receiving fifth information from the serving cell, in which the fifth information indicates that the terminal accesses the target cell.

In the above embodiment, the target cell may send the PDCCH after receiving the fifth information, thereby improving the efficiency of the cell switch for the terminal, and reducing the switch latency.

In combination with some embodiments in the first aspect, the PDCCH is sent by the target cell after a first time elapses following a receipt of fifth information from the serving cell, where the fifth information indicates that the terminal accesses the target cell.

In the above embodiment, the target cell may send the PDCCH after receiving the fifth information and the first time elapses, thereby improving the efficiency of the cell switch for the terminal, and reducing the switch latency.

In combination with some embodiments in the first aspect, the method further includes: reporting sixth information, in which the sixth information indicates the first time. The first time is an offset time required for the target cell to send the PDCCH.

In the above embodiment, the terminal may report the first time, which is configured for the target cell to send the PDCCH after receiving the fifth information and the first time elapses, thereby improving the efficiency of the cell switch for the terminal, and reducing the switch latency.

According to a second aspect of the embodiments of the disclosure, a uplink communication method is provided, and the method includes: receiving second information based on a first resource, in which the second information indicates that a terminal accesses a target cell, and the first resource is a time-frequency resource allocated by the target cell to the terminal for sending the second information.

In the above embodiment of the disclosure, the terminal send a message to the target cell based on the first resource, enabling the target cell to determine that the target cell may communication with the terminal, thus improving the efficiency of the cell switch for the terminal, and reducing the switch latency.

In combination with some embodiments in the second aspect, the first resource includes at least one of: an SR resource corresponding to the target cell; a CG PUSCH resource of the target cell; a semi-persistent SRS resource corresponding to the target cell; a PUSCH resource of the target cell scheduled by the first information; or a PUSCH resource scheduled based on a PDCCH sent by the target cell.

In combination with some embodiments in the second aspect, the SR resource is configured by third information sent by a serving cell.

In combination with some embodiments in the second aspect, the method further includes: receiving fifth information sent by a serving cell, in which the fifth information indicates that the terminal accesses the target cell, and the first resource is configured to receive the second information after the fifth information is received, and/or the first resource is configured for communication between other devices and the target cell before the fifth information is received, in which the first resource is the SR resource corresponding to the target cell.

In the above embodiment, the target cell may configure, after receiving the fifth information, the first resource to be used for receiving the second information, so that the first resource may be used for communication with other terminals in other time periods, thus avoiding resource waste.

In combination with some embodiments in the second aspect, the CG PUSCH resource is configured and activated by the first information sent by a serving cell.

In combination with some embodiments in the second aspect, the CG PUSCH resource is configured by fourth information sent by a serving cell and activated by the first information sent by the serving cell.

In combination with some embodiments in the second aspect, a starting time-domain position of the first resource is determined based on a time-domain offset and a time-domain position at which the terminal receives the first information, the first resource is the PUSCH resource of the target cell scheduled by the first information, and the first information is sent by a serving cell.

In combination with some embodiments in the second aspect, the time-domain offset is determined based on at least one of: a predefined rule; or being configured by a network device, in which the network device includes a network device corresponding to the serving cell.

In combination with some embodiments in the second aspect, the method further includes: receiving fifth information sent by a serving cell; and sending the PDCCH, in which the fifth information indicates that the terminal accesses the target cell.

In combination with some embodiments in the second aspect, the method further includes: receiving fifth information sent by a serving cell; sending the PDCCH after a first time elapses, in which the fifth information indicates that the terminal accesses the target cell.

In combination with some embodiments in the second aspect, the method further includes: receiving sixth information, in which the sixth information indicates the first time. The first time is an offset time required for the target cell to send the PDCCH.

According to a third aspect of the embodiments of the disclosure, a uplink communication method is provided, and the method includes: sending first information to a terminal, in which the first information is configured to instruct the terminal to access a target cell, second information is transmitted between the terminal and the target cell via a first resource, the second information indicates that the terminal accesses the target cell, and the first resource is a time-frequency resource allocated by the target cell to the terminal for transmitting the second information.

In the above embodiment of the disclosure, the terminal send a message to the target cell based on the first resource, enabling the target cell to determine that the target cell may communication with the terminal, thus improving the efficiency of the cell switch for the terminal, and reducing the switch latency.

In combination with some embodiments in the third aspect, the first resource includes at least one of: an SR resource corresponding to the target cell; a CG PUSCH resource of the target cell; a semi-persistent SRS resource corresponding to the target cell; a PUSCH resource of the target cell scheduled by the first information; or a PUSCH resource scheduled based on a PDCCH sent by the target cell.

In combination with some embodiments in the third aspect, the method further includes: sending third information, in which the third information is used to configure the first resource, and the first resource is the SR resource corresponding to the target cell.

In combination with some embodiments in the third aspect, the method further includes: sending fifth information to the target cell, in which the fifth information indicates that the terminal accesses the target cell, and the first resource is configured to receive the second information after the fifth information is received, and/or the first resource is configured for communication between other devices and the target cell before the fifth information is received, in which the first resource is the SR resource corresponding to the target cell.

In combination with some embodiments in the third aspect, the CG PUSCH resource is configured and activated via the first information.

In combination with some embodiments in the third aspect, the CG PUSCH resource is activated by the first information, and the method further includes: sending fourth information, in which the fourth information is used to configure the CG PUSCH resource.

In combination with some embodiments in the third aspect, a starting time-domain position of the first resource is determined based on a time-domain offset and a time-domain position at which the terminal receives the first information, the first resource is the PUSCH resource of the target cell scheduled by the first information.

In combination with some embodiments in the third aspect, the time-domain offset is determined based on at least one of: a predefined rule; or being configured by a network device, in which the network device includes a network device corresponding to the serving cell.

In combination with some embodiments in the third aspect, the method further includes: sending fifth information to the target cell, in which the fifth information indicates that the terminal accesses the target cell, and the PDCCH is sent by the target cell after receiving the fifth information from the serving cell.

In combination with some embodiments in the third aspect, the method further includes: sending fifth information to the target cell, in which the fifth information indicates that the terminal accesses the target cell, and the PDCCH is sent by the target cell after a first time elapses following a receipt of the fifth information from the serving cell.

In combination with some embodiments in the third aspect, the method further includes: receiving sixth information, in which the sixth information indicates the first time, and the first time is an offset time required for the target cell to send the PDCCH; and forwarding the sixth information to the target cell.

According to a fourth aspect of the embodiments of the disclosure, a uplink communication method is provided, and the method includes: a serving cell sending first information to a terminal, in which the first information is configured to instruct a terminal to access a target cell; the terminal receiving the first information sent by the serving cell; the terminal sending second information to the target cell based on a first resource, in which the second information indicates that the terminal accesses the target cell, and the first resource is a time-frequency resource allocated by the target cell to the terminal for sending the second information; and the target cell receiving the second information based on the first resource.

In the above embodiment of the disclosure, the terminal send a message to the target cell based on the first resource, enabling the target cell to determine that the target cell may communication with the terminal, thus improving the efficiency of the cell switch for the terminal, and reducing the switch latency.

According to a fifth aspect of the embodiments of the disclosure, a terminal is provided, including a transceiving module, configured to receive first information sent by a serving cell, in which the first information is configured to instruct a terminal to access a target cell. The transceiving module is further configured to send second information based on a first resource, in which the second information indicates that the terminal accesses the target cell, and the first resource is a time-frequency resource allocated by the target cell to the terminal for sending the second information.

In the above embodiment of the disclosure, the terminal send a message to the target cell based on the first resource, enabling the target cell to determine that the target cell may communication with the terminal, thus improving the efficiency of the cell switch for the terminal, and reducing the switch latency.

According to a sixth aspect of the embodiments of the disclosure, a first network device is provided, including a transceiving module, configured to receive second information based on a first resource, in which the second information indicates that a terminal accesses a target cell, and the first resource is a time-frequency resource allocated by the target cell to the terminal for sending the second information.

In the above embodiment of the disclosure, the terminal send a message to the target cell based on the first resource, enabling the target cell to determine that the target cell may communication with the terminal, thus improving the efficiency of the cell switch for the terminal, and reducing the switch latency.

According to a seventh aspect of the embodiments of the disclosure, a second network device is provided, including a transceiving module, configured to send first information to a terminal, in which the first information is configured to instruct the terminal to access a target cell, second information is transmitted between the terminal and the target cell via a first resource, the second information indicates that the terminal accesses the target cell, and the first resource is a time-frequency resource allocated by the target cell to the terminal for transmitting the second information.

In the above embodiment of the disclosure, the terminal send a message to the target cell based on the first resource, enabling the target cell to determine that the target cell may communication with the terminal, thus improving the efficiency of the cell switch for the terminal, and reducing the switch latency.

According to an eighth aspect of the embodiments of the disclosure, a terminal is provided, including: one or more transceivers; one or more processors; and one or more memories, configured to store one or more computer programs, in which the one or more computer programs include instructions that, when executed by the one or more processors of the terminal, cause the terminal to perform the uplink communication method according to the first aspect and any one of the implementations of the first aspect.

In the above embodiment of the disclosure, the terminal send a message to the target cell based on the first resource, enabling the target cell to determine that the target cell may communication with the terminal, thus improving the efficiency of the cell switch for the terminal, and reducing the switch latency.

According to a ninth aspect of the embodiments of the disclosure, a first network device is provided, including: one or more transceivers; one or more processors; and one or more memories, configured to store one or more computer programs, in which the one or more computer programs include instructions that, when executed by the one or more processors of the first network device, cause the first network device to perform the uplink communication method according to the second aspect and any one of the implementations of the second aspect.

In the above embodiment of the disclosure, the terminal send a message to the target cell based on the first resource, enabling the target cell to determine that the target cell may communication with the terminal, thus improving the efficiency of the cell switch for the terminal, and reducing the switch latency.

According to a tenth aspect of the embodiments of the disclosure, a second network device is provided, including: one or more transceivers; one or more processors; and one or more memories, configured to store one or more computer programs, in which the one or more computer programs include instructions that, when executed by the one or more processors of the second network device, cause the second network device to perform the uplink communication method according to the third aspect and any one of the implementations of the third aspect.

In the above embodiment of the disclosure, the terminal send a message to the target cell based on the first resource, enabling the target cell to determine that the target cell may communication with the terminal, thus improving the efficiency of the cell switch for the terminal, and reducing the switch latency.

According to an eleventh aspect of the embodiments of the disclosure, a communication system is provided. The communication system includes a terminal, a first network device, and a second network device, where the terminal is configured to implement the uplink communication method according to the first aspect and any one of the implementations of the first aspect, the first network device is configured to implement the uplink communication method according to the second aspect and any one of the implementations of the second aspect, and the second network device is configured to implement the uplink communication method according to the third aspect and any one of the implementations of the third aspect.

In the above embodiment of the disclosure, the terminal send a message to the target cell based on the first resource, enabling the target cell to determine that the target cell may communication with the terminal, thus improving the efficiency of the cell switch for the terminal, and reducing the switch latency.

According to a twelfth aspect of the embodiments of the disclosure, a storage medium is provided. The storage medium stores instructions that, when run on a communication device, cause the communication device to perform the uplink communication method according to the first aspect and any one of the implementations of the first aspect, or the second aspect and any one of the implementations of the second aspect, or the third aspect and any one of the implementations of the third aspect.

In the above embodiment of the disclosure, the terminal send a message to the target cell based on the first resource, enabling the target cell to determine that the target cell may communication with the terminal, thus improving the efficiency of the cell switch for the terminal, and reducing the switch latency.

According to a thirteenth aspect of the embodiments of the disclosure, a program product is provided, which, when executed by a communication device, causes the communication device to perform the method described in the implementations of the first aspect or the second aspect.

According to a fourteenth aspect of the embodiments of the disclosure, a computer program is provided, which, when run on a computer, causes the computer to perform the method described in the implementations of the first aspect or the second aspect.

According to a fifteenth aspect of the embodiments of the disclosure, a chip or chip system is provided. The chip or chip system includes a processing circuit configured to perform the method described in the implementations of the first aspect or the second aspect as described above.

It may be understood that the terminal, network device, communication system, storage medium, program product, computer program, chip or chip system involved in the various embodiments of the disclosure are all configured to perform the methods proposed by the embodiments of the disclosure. Therefore, the beneficial effects they can achieve may refer to the beneficial effects in the corresponding methods, which are not repeated here.

The embodiments of the disclosure provide the uplink communication method, an apparatus, a device, and a storage medium. In some embodiments, the term "uplink communication method" may be used interchangeably with terms such as "information processing method" and "communication method". The term "uplink communication apparatus" may be used interchangeably with terms such as "information processing apparatus" and "communication apparatus". The term "uplink processing system" may be used interchangeably with terms such as "communication system".

The embodiments of the disclosure are not exhaustive but merely illustrative of some embodiments, and shall not serve as specific limitations on the protection scope of the disclosure. Without conflict, each step in a certain embodiment may be implemented as an independent embodiment, and the steps may be combined arbitrarily. For example, the solution after removing some steps in a certain embodiment may also be implemented as an independent embodiment, and the order of the steps in a certain embodiment may be swapped arbitrarily. In addition, optional implementations in a certain embodiment may be combined arbitrarily; furthermore, the embodiments may be combined arbitrarily. For example, some or all steps of different embodiments may be combined arbitrarily, and a certain embodiment may be combined arbitrarily with optional implementations of other embodiments.

In each embodiment of the disclosure, unless otherwise specified and without logical conflict, the terms and/or descriptions between the embodiments are consistent and may be cross-referenced. Technical features in different embodiments may be combined to form new embodiments according to their inherent logical relationships.

The terms used in the embodiments of the disclosure are merely for the purpose of describing specific embodiments and are not intended to limit the disclosure.

In the embodiments of the disclosure, unless otherwise stated, elements expressed in the singular form, such as "a", "an", "the", "said", "aforesaid", and "this", may mean "one and only one", or "one or more", "at least one", etc. For example, when articles such as "a", "an", and "the" in English are used in translation, the noun following the article may be understood as a singular form or a plural form.

In the embodiments of the disclosure, "a plurality of' refers to two or more.

In some embodiments, terms such as "at least one (of)", "one or more", "a plurality of", and "multiple" may be used interchangeably.

In some embodiments, recording methods such as "at least one of A and B", "A and/or B", "A in one case and B in another case", and "one case A and another case B" may include the following technical solutions depending on the context: executing A in some embodiments (executing A independently of B); executing B in some embodiments (executing B independently of A); selectively executing either A or B in some embodiments (A and B are selectively executed); and executing both A and B in some embodiments (both A and B are executed). The same applies when there are more branches such as A, B, and C.

In some embodiments, recording methods such as "A or B" may include the following technical solutions depending on the context: executing A in some embodiments (executing A independently of B); executing B in some embodiments (executing B independently of A); and selectively executing either A or B in some embodiments (A and B are selectively executed). The same applies when there are more branches such as A, B, and C.

Prefixes such as "first" and "second" in the embodiments of the disclosure are merely used to distinguish different description objects and do not limit the position, order, priority, quantity, or content of the description objects. For the description of the description objects, refer to the description in the claims or the context of the embodiments, and unnecessary limitations shall not be constituted due to the use of the prefixes. For example, when the description object is a "field", the ordinal numbers before "field" in "the first field" and "the second field" do not limit the position or order between the "fields", and "first" and "second" do not limit whether the "fields" modified thereby are in the same message or the order between "the first field" and "the second field". For another example, when the description object is a "level", the ordinal numbers before "level" in "the first level" and "the second level" do not limit the priority between the "levels". For yet another example, the quantity of the description object is not limited by the ordinal number and may be one or more. Taking "the first apparatus" as an example, the quantity of the "apparatus" may be one or more. In addition, objects modified by different prefixes may be the same or different. For example, when the description object is an "apparatus", "the first apparatus" and "the second apparatus" may be the same or different apparatuses, and their types may be the same or different; for another example, when the description object is "information", "the first information" and "the second information" may be the same or different information, and their contents may be the same or different.

In some embodiments, expressions such as "including A", "comprising A", "used to indicate A", and "carrying A" may be interpreted as directly carrying A or indirectly indicating A.

In some embodiments, the terms "in response to...", "in response to determining that...", "in the case that...", "when...", "at the time when...", "if...", and "in the event that..." may be used interchangeably.

In some embodiments, terms such as "greater than", "greater than or equal to", "not less than", "more than", "more than or equal to", "no less than", "higher than", "higher than or equal to", "not lower than", and "above" may be used interchangeably; terms such as "less than", "less than or equal to", "not greater than", "fewer than", "fewer than or equal to", "no more than", "lower than", "lower than or equal to", "not higher than", and "below" may be used interchangeably.

In some embodiments, an apparatus or the like may be interpreted as physical or virtual, and its name is not limited to the name recorded in the embodiments; terms such as "apparatus", "equipment", "device", "circuit", "network element", "node", "function", "unit", "section", "system", "network", "chip", "chip system", "entity", and "subject" may be used interchangeably.

In some embodiments, the term "network" may be interpreted as an apparatus included in a network (e.g., an access network device, a core network device, etc.).

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", and "bandwidth part (BWP)" may be used interchangeably.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "wireless terminal", "remote terminal", "handset", "user agent", "mobile client", and "client" may be used interchangeably.

In some embodiments, acquiring data, information, etc., may comply with the laws and regulations of the country where it is located.

In some embodiments, data, information, etc., may be acquired with the user's consent.

In addition, each element, each row, or each column in the tables of the embodiments of the disclosure may be implemented as an independent embodiment, and any combination of any elements, any rows, or any columns may also be implemented as an independent embodiment.

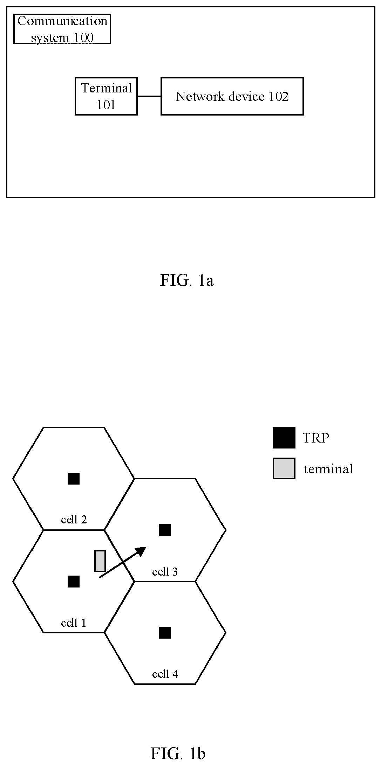

FIG. 1a is a schematic diagram of a communication system according to an embodiment of the disclosure.

As shown in FIG. 1a, a communication system 100 includes a terminal 101 and a network device 102.

In some embodiments, the terminal 101 includes, for example, at least one of a mobile phone, a wearable device, an Internet of Things (IoT) device, a vehicle with communication functions, an intelligent vehicle, a tablet computer (Pad), a computer with wireless transceiving functions, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited thereto.

In some embodiments, the network device 102 may include at least one of an access network device or a core network device.

In some embodiments, the access network device is, for example, a node or device that accesses terminals to a wireless network. The access network device may include at least one of an evolved nodeB (eNB) in a 5G communication system, a next generation eNB (ng-eNB), a next generation nodeB (gNB), a node B (NB), a home nodeB (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (open RAN), a cloud base station (cloud RAN), a base station in other communication systems, and an access node in a Wi-Fi system, but is not limited thereto.

In some embodiments, the technical solutions of the disclosure may be applicable to an open RAN architecture. In this case, the interfaces between access network devices or within an access network device involved in the embodiments of the disclosure may become internal interfaces of the open RAN, and the processes and information interaction between these internal interfaces may be implemented through software or programs.

In some embodiments, the access network device may be composed of a central unit (CU) and a distributed unit (DU). The CU may also be referred to as a control unit. The CU-DU structure may split the protocol layers of the access network device, with functions of some protocol layers centrally controlled by the CU, and functions of the remaining part or all of the protocol layers distributed in the DU, where the CU centrally controls the DU, but is not limited thereto.

In some embodiments, the core network device may be a single device including one or more network elements, or may be a plurality of devices or device groups respectively including all or part of the aforementioned one or more network elements. The network elements may be virtual or physical. A core network includes, for example, at least one of an evolved packet core (EPC), a 5G core network (5GCN), or a next generation core (NGC).

It is understandable that the communication system described in the embodiments of the disclosure is for the purpose of more clearly illustrating the technical solutions of the embodiments of the disclosure, and does not constitute a limitation on the technical solutions proposed in the embodiments of the disclosure. As understood by those of ordinary skill in the art, with the evolution of system architectures and the emergence of new service scenarios, the technical solutions proposed in the embodiments of the disclosure are equally applicable to similar technical problems.

The following embodiments of the disclosure may be applied to the communication system 100 shown in FIG. 1a, or some subjects in the communication system 100, but are not limited thereto. Each subject shown in FIG. 1a is an example. The communication system may include all or part of the subjects in FIG. 1a, or may include other subjects not shown in FIG. 1a. The number and form of each subject are arbitrary. The connection relationship between each subject is an example. Each subject may be unconnected or connected, and the connection may be in any manner, either direct connection or indirect connection, wired connection or wireless connection.

The embodiments of the disclosure may be applied to long term evolution (LTE), LTE-advanced (LTE-A), LTE-beyond (LTE-B), SUPER 3G, international mobile telecommunications-advanced (IMT-Advanced), 4th generation mobile communication system (4G), 5th generation mobile communication system (5G), 5G new radio (NR), future radio access (FRA), new-radio access technology (new RAT), NR, new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wide band (UWB), Bluetooth (registered trademark), public land mobile network (PLMN), device-to-device (D2D) system, machine to machine (M2M) system, internet of things (IoT) system, vehicle-to-everything (V2X), systems using other communication methods, next-generation systems extended based on them, etc. In addition, a plurality of systems may be combined (for example, a combination of LTE or LTE-A and 5G, etc.) for application.

In some embodiments of the disclosure, a scenario of layer 1/layer 2 (L1/L2)-based inter-cell mobility (LTM) is proposed in release 18 (R18). This scenario is illustrated in FIG. 1b. As may be seen from FIG. 1b, a terminal moves between cells-for example, moving from cell 1 to cell 3 in a direction indicated by an arrow. It is to be understood that within a corresponding cell, the terminal may communicate with a network device of that cell via a transmission and reception point (TRP) of the cell. In the scenario shown in FIG. 1b, the network device may maintain a plurality of candidate cells for the terminal. As the terminal moves, when a cell switch is required, one cell may be selected from the plurality of candidate cells as the target cell, and the terminal may switch to the target cell.

In some embodiments, to reduce switch latency and complete the switch as soon as possible, unlike traditional cell switch, in this example, radio resource control (RRC) parameters of each candidate cell may be pre-configured in the terminal. The network device may determine whether to perform the cell switch based on a results of L1 measurement performed by the terminal. When the network device determines that the cell switch is required, the network device may trigger the terminal to switch to the target cell via a dynamic switch signaling.

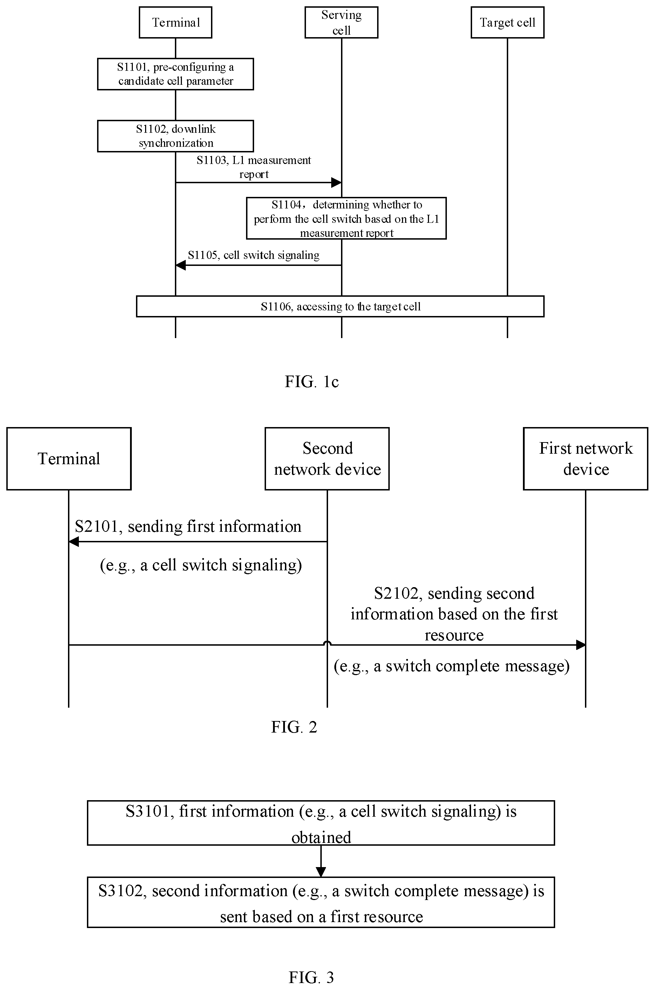

FIG. 1c is a schematic interaction diagram of a cell switch signaling according to an embodiment. As shown in FIG. 1c, a process of the terminal performing the cell switch may include the following steps.

At step S1101, a candidate cell parameter may be pre-configured for the terminal.

In some embodiments, the network device may pre-configure parameters of one or more candidate cells for the terminal.

For example, the network device of a serving cell may pre-configure parameters of one or more candidate cells for the terminal based on a radio resource management (RRM) measurement result. In some cases, the RRM measurement result may also be referred to as an L3 measurement results. It is to be understood that since the serving cell has established a connection with the terminal and provides services to the terminal, the network device of the serving cell may pre-configure parameters of one or more candidate cells for the terminal. In contrast, since the candidate cells have not established a connection with the terminal, they cannot provide services to the terminal and thus cannot configure corresponding parameters for the terminal.

For example, the RRC parameters of each candidate cell are sent to the terminal in advance and stored in the terminal.

In some embodiments, the terminal may use pre-configured partial parameters of the candidate cells, such as beam measurement reference signals of each candidate cell, to perform beam measurement on at least one beam in the candidate cell, and obtain a beam measurement result corresponding to the candidate cell. It is to be understood that beam measurement is usually performed on a plurality of beams in one candidate cell. In addition, when candidate cell parameters of a plurality of cells are pre-configured, the beam measurement may be performed on the plurality of different candidate cells by using the beam measurement reference signals of the corresponding candidate cells, respectively, to obtain the beam measurement results corresponding to the plurality of candidate cells.

At step S1102, the terminal performs downlink synchronization.

In some embodiments, the terminal may maintain downlink synchronization with the candidate cell by receiving a synchronization signal/physical broadcast channel block (SSB) of the candidate cell.

At step S1103, the terminal sends an L1 measurement report to the network device of the serving cell.

In some embodiments, the terminal may report a measurement report of the beam measurement result obtained by the terminal's measurement to the network device of the serving cell. The beam measurement results may also be referred to as an L1 measurement result. It is to be understood that the serving cell may be a cell where the terminal is located before performing the cell switch.

In some embodiments, the terminal performs the beam measurement on the candidate cell. For example, the terminal measures L1-reference signal receiving power (L1-RSRP), L1-signal interference noise ratio (L1-SINR), etc.

At step S1104, the network device of the serving cell determines whether to perform the cell switch based on the L1 measurement report.

In some embodiments, upon receiving the L1 measurement report sent by the terminal, the network device of the serving cell may determine whether the terminal needs to perform the cell switch based on the L1 measurement report.

For example, the network device of the serving cell may determine that the terminal does not need to perform the cell switch.

For another example, the network device of the serving cell may determine that the terminal needs to perform the cell switch. Of course, the network device of the serving cell may further determine to which new cell the terminal is to be switched. For example, the cell to which the terminal is switched after the cell switch may be referred to as a target cell. That is, the target cell is the serving cell of the terminal after the cell switch is performed.

It is to be understood that the target cell may be a candidate cell selected by the network device of the serving cell from one or more candidate cells as the target cell.

At step S1105, the network device of the serving cell sends the cell switch signaling to the terminal.

In some embodiments, when the network device of the serving cell determines that the terminal needs to perform the cell switch, the network device of the serving cell may send the cell switch signaling to the terminal. The cell switch signaling may be configured to instruct the terminal to perform the cell switch.

In some embodiments, the cell switch signaling may further indicate the target cell.

At step S1106, the terminal accesses to the target cell.

In some embodiments, in a case where the terminal received the cell switch signaling, the terminal may perform a random switch. When the terminal accesses the target cell, the cell switch of the terminal may completed.

It is to be understood that in the process shown in FIG. 1c, the terminal needs to perform L1 measurements on each candidate cell and report the obtained measurement results to the network device of the serving cell, so that the network device of the serving cell may determine whether the terminal needs to perform the cell switch based on the measurement results.

In some embodiments, to reduce the switch latency of the terminal during the cell switch and complete the switch as soon as possible, a switch mode supporting RACH-less is proposed, which may be referred to as a RACH-less switch scheme. In LTM supporting RACH-less, the TA of each candidate cell measured by the terminal may be obtained in advance. When the terminal performs the cell switch, the terminal no longer needs to perform uplink synchronization with the target cell via the RACH.

It is to be understood that in the various embodiments of the disclosure, the serving cell may also be referred to as a source cell, i.e., a cell that is currently connected to the terminal and provides communication services for the terminal.

In RACH-less LTM, for the target cell, the target cell does not know in advance which terminals are to access the target cell, or it may be considered that the target cell is not aware of which newly accessed terminals the target cell may already communicate with.

In some embodiments, after receiving the cell switch signaling sent by the serving cell, the terminal may send a specific message to the target cell, for example, referred to as a switch complete message. The switch complete message may be used to inform the target cell that the terminal accesses the target cell and that the target cell may communicate with the terminal.

In some embodiments, the switch complete message may be denoted as RRCReconfigurationComplete. Of course, the switch complete message may also take any other form, which is not limited in the disclosure.

However, in this case, since the terminal is not actually accessed the target cell, it is currently unclear how to allocate corresponding resources to the terminal for sending the switch complete message.

FIG. 2 is a schematic interaction diagram of an uplink communication method according to an embodiment of the disclosure. As shown in FIG. 2, the embodiment of the disclosure relates to an uplink communication method for the communication system 100, where the method includes the following steps.

At step S2101, a second network device sends first information to the terminal.

In some embodiments, the second network device sends the first information to the terminal.

In some embodiments, the terminal receives the first information sent by the second network device.

In some embodiments, the terms "send", "transmit", "report", "deliver", "transfer", "bidirectional transfer", and "send and/or receive" may be used interchangeably.

In some embodiments, the second network device is a network device corresponding to the serving cell. Herein, the terminal communicating with the second network device has the same meaning as the terminal communicating with the serving cell.

In some embodiments, the first information is configured to instruct the terminal to perform the cell switch.

In some embodiments, the first information may be a cell switch signaling.

For example, upon receiving the cell switch signaling sent by the serving cell, the terminal may determine to perform the cell switch. The serving cell may select, from a plurality of candidate cells, a cell that meets a preset condition-such as a candidate cell whose signal quality is greater than or equal to a quality threshold, or a candidate cell whose signal strength is greater than or equal to a strength threshold. The serving cell may also indicate these candidate cells to the user as target cells.

It is to be understood that if there is only one candidate cell meeting the corresponding condition, that candidate cell is taken as the target cell. If there are a plurality of candidate cells meeting the corresponding condition, one may be selected from the plurality of candidate cells as the target cell. Of course, a specific selection rule may be arbitrarily adjusted according to actual conditions, such as random selection or selection of a matching candidate cell based on a corresponding condition, which is not limited in the disclosure.

In some embodiments, the terms "information", "message", "signal", "signaling", "report", "configuration", "indication", "instruction", "command", "channel", "parameter", "domain", "field", "symbol", "symbol", "codebook", "codeword", "codepoint", "bit", "data", "program", and "chip" may be used interchangeably.

In some embodiments, a network device sending information to a terminal may be regarded as downlink communication. The network device herein may be a first network device or the second network device.

In some embodiments, the terms "downlink", "downlink channel", and "physical downlink channel" may be used interchangeably.

At step S2102, the terminal sends second information to a first network device based on the first resource.

In some embodiments, the terminal sends the second information to the first network device based on the first resource.

In some embodiments, the first network device receives the second information sent by the terminal based on the first resource.

In some embodiments, a terminal sending information to a network device may be regarded as uplink communication. The network device herein may be the first network device or the second network device.

In some embodiments, the terms "uplink", "uplink channel", and "physical uplink channel" may be used interchangeably.

In some embodiments, the terms "target", "certain", "preset", "preconfigured", "configured", "indicated", "a certain", "any", and "first" may be used interchangeably. Phrases such as "certain A", "preset A", "preconfigured A", "configured A", "indicated A", "a certain A", "any A", and "first A" may be interpreted as A pre-specified in a protocol or the like, A obtained through configuration, setting, or indication, or a specific A, a certain A, any A, or the first A, etc., but are not limited thereto.

In some embodiments, the first network device is the network device corresponding to the target cell. Herein, the terminal communicating with the first network device has the same meaning as the terminal communicating with the target cell.

In some embodiments, the second information indicates that the terminal accesses the target cell.

In some embodiments, the second information may be a switch complete message.

For example, upon receiving the cell switch signaling, the terminal determines to perform the cell switch. The terminal may start preparation work, such as processing the RRC parameters of the target cell and switching a transmission beam. After completing the preparation work, the terminal sends the switch complete message to the target cell based on the first resource.

In some embodiments, the first resource may be a pre-allocated time-frequency resource for the terminal, which is used by the terminal to send the switch complete message to the target cell based on the first resource when the preparation for the cell switch is completed, so as to inform the target cell that the terminal has completed the cell switch and the terminal can communicate with the target cell.

In some embodiments, the first resource may include an SR resource corresponding to the target cell.

For example, an SR may be preconfigured for the terminal, and the SR may be associated with a physical uplink control channel (PUCCH) resource of the target cell. It is to be understood that the SR resource mentioned above may also be regarded as the PUCCH resource associated with the SR.

After the terminal receives the first information and completes the preparation work for the cell switch, the terminal may send the SR to the target cell and transmit the second information on a resource used for sending the SR. By sending the SR to the target cell, the second information is delivered to the target cell. For example, SR information may indicate that the terminal accesses the target cell. Upon receiving the SR, the target cell may parse the SR and determine that the terminal accesses the target cell. The target cell may further confirm, based on the received SR, that the terminal has completed the preparations work for accessing the target cell and is ready to communicate with the target cell.

For another example, after sending the SR, the terminal may wait for the target cell to schedule an uplink resource for the terminal. Once the target cell schedules the uplink resource, the terminal may transmit the second information on the uplink resource scheduled by the target cell.

In some examples, the network device (e.g., the network device of the serving cell) configures the terminal with a plurality of candidate cells and a specific resource corresponding to each candidate cell. When the network device determines, based on the measurement result reported by the terminal, that the terminal needs to switch to a new serving cell, the network device may select the target cell from the plurality of candidate cells. The network device then sends the first information to instruct the terminal to switch to the target cell, and the terminal transmits the aforementioned second information using the resource (i.e., the first resource) corresponding to the target cell. It may be seen that during the cell switch, the terminal may send the second information to the target cell based on the pre-configured first resource to inform the target cell of the terminal's access. In this way, the terminal does not need to perform the uplink synchronization with the target cell via the RACH, thereby reducing a latency of the terminal switching to the target cell. In addition, since the terminal may inform the target cell of the terminal's access in a case of RACH-less, the terminal may perform the cell switch by obtaining the TA of the target cell in advance, which further improves the efficiency of the cell switch for the terminal.

In some embodiments, in a case where the first resource includes the SR resource corresponding to the target cell, the serving cell may send third information to the terminal. The third information is used to configure the aforementioned SR resource, that is, the third information may be used to configure the SR resource corresponding to the target cell for the terminal, enabling the terminal to be aware of the SR resource corresponding to the target cell.

In some embodiments, the SR resource pre-allocated by the target cell to the terminal remains in an idle state for a certain period. This is because the terminal will only use the SR resource of the target cell in a case where the serving cell determines that a switch is necessary and sends the first information. In other words, the terminal will not send the SR to the target cell before receiving the first information. Thus, before the terminal receiving the first information, the pre-allocated SR resource is in the idle state. Therefore, for the pre-configured SR resource, the target cell may allocate, in a case of no SR is being transmitted, the pre-configured SR resource to other terminals in a connected state. For instance, the target cell may communicate with other terminals and provide communication services to the other terminals. Meanwhile, the target cell may communicate with the serving cell. When the serving cell sends the first information to the terminal, the serving cell may also send fifth information to the target cell. Upon receiving the fifth information, the target cell determines that the terminal is ready to access the target cell and reserves the SR resource for receiving the SR from the terminal. Before receiving the fifth information, the target cell may allocate the SR resource to other terminals, thereby avoiding resource waste.

In some embodiments, the terms "moment", "time point", "time", and "time position" may be used interchangeably; the terms "time duration", "time period", "time window", "window", and "time" may be used interchangeably.

In some embodiments, the fifth information indicates that the terminal will access the target cell.

In some embodiments, the first resource may include a CG PUSCH resource of the target cell.

In some embodiments, the first information may configure a time-frequency resource of a CG PUSCH and may also be used to activate the CG PUSCH resource. The terminal may send the second information to the target cell based on the CG PUSCH resource and perform subsequent communications. After the terminal switches to the target cell, a deactivation of the CG PUSCH resource may be performed via downlink control information (DCI) sent by the target cell.

In some embodiments, the terms "DCI", "downlink (DL) assignment", "DL DCI", "uplink (UL) grant", and "UL DCI" may be used interchangeably.

In some embodiments, the first information may be used to activate the CG PUSCH resource. In this case, the target cell may send fourth information to the terminal, where the fourth information is used to configure the time-frequency resource of the CG PUSCH.

It is to be understood that the sending of the fourth information may be performed before step S2101, which is not limited in the disclosure.

For example, the serving cell sends the fourth information and the first information to the terminal. The fourth information is used to configure the time-frequency resource of the CG PUSCH, and the first information is used to activate the time-frequency resource configured by the fourth information.

In some embodiments, the fourth information may be used to configure a period of the CG PUSCH, and the first information is used to activate and indicate the CG PUSCH resource.

In some embodiments, the first resource may include a semi-persistent SRS resource corresponding to the target cell.

In some embodiments, the semi-persistent SRS resource may be activated by the first information.

For example, the terminal may pre-receive seventh information sent by the serving cell, where the seventh information configures the semi-persistent SRS resource for the terminal. The terminal may activate the semi-persistent SRS resource based on the first information. After completing the preparation work for the cell switch, the terminal may send an SRS based on the semi-persistent SRS resource. For the target cell, receiving the SRS indicates that the terminal may access the target cell. Thereafter, uplink and downlink communications may be performed between the target cell and the terminal, such as uplink or downlink scheduling.

Herein, the seventh information may be pre-configured by the serving cell via a RRC signaling before implementing RACH-less LTM.

In some embodiments, the first resource may include a PUSCH resource of the target cell scheduled by the first information.

In some embodiments, the first information may include information for scheduling the PUSCH resource of the target cell.

In some embodiments, the first information may also be referred to as scheduling information or resource scheduling information, and the name of the first information is not limited in the disclosure.

For example, the first information may include time domain resource scheduling information (TimeDomainResourceAllocation) and frequency domain resource scheduling information (FrequencyDomainResourceAssignment). A frequency domain resource allocation mode may be pre-configured to the terminal via RRC parameters of the serving cell. Alternatively, for example, the first information may include TimeDomainResourceAllocation, the frequency domain resource allocation mode, and FrequencyDomainResourceAssignment.

In some embodiments, in a case where the terminal determines, based on the first information, the PUSCH resource of the scheduled target cell, the terminal may determine to send a PUSCH after receiving the first information and a time offset elapses.

For example, the terminal receives the first information in the n-th slot, and may send the PUSCH in the first slot after a first offset from slot n.

In some embodiments, the aforementioned time offset may be determined by a subcarrier spacing corresponding to the PUSCH, a subcarrier spacing of a downlink PDSCH via which the first information is sent, a minimum processing time $K_2$ required by the terminal to process the information, and an offset.

In some embodiments, the time offset may be determined by Formula 1:

$$\left\lceil n \bullet \frac{2^{\mu_{PUSCH}}}{2^{\mu_{PDSCH}}} \right\rceil + K_2 + \mathrm{offset}$$

$$\cdots\cdots \mathrm{Formula} \ 1$$

where n denotes the n-th slot, $2^{\mu_{PUSCH}}$ denotes the subcarrier spacing of the PUSCH, and $2^{\mu_{PDSCH}}$ denotes the subcarrier spacing of the PDSCH via which the serving cell sends the first information.

In some embodiments, the time offset may be K2+offset, which is determined, for example, by Formula 2:

$$K_2 + \mathrm{offset}$$

$$\cdots\cdots \mathrm{Formula} \ 2$$

In some embodiments, the aforementioned time offset may be determined based on a predefined rule.

In some embodiments, the aforementioned time offset may be configured based on the network device.

In some embodiments, the aforementioned time offset may be configured based on the second network device corresponding to the serving cell.

In some embodiments, in a case where the time offset is configured by the second network device corresponding to the serving cell, the terminal may send sixth information to the second network device corresponding to the serving cell. The sixth information may indicate a capability of the terminal.

In some embodiments, the sixth information may be referred to as capability information, which may be used to report a preparation time required by the terminal for the cell switch.

In some embodiments, the sixth information may also be referred to as terminal capability information, terminal capability, or capability parameter, and the name of the sixth information is not limited in the disclosure.

In some embodiments, the first resource may include a PUSCH resource scheduled based on a PDCCH sent by the target cell.

For example, the terminal waits to receive the PDCCH sent by the target cell and transmits uplink data on the PUSCH resource scheduled by the PDCCH.

Specifically, the PUSCH resource may be scheduled by DCI sent on the PDCCH of the target cell, and the second information may be transmitted on the scheduled PUSCH resource.

In some embodiments, the PDCCH sent by the target cell may be transmitted after the target cell receives the fifth information sent by the serving cell.

For example, when the serving cell sends the fifth information to the target cell, the target cell may send the PDCCH to the terminal upon receiving the fifth information, enabling the terminal to schedule the PUSCH resource based on the DCI sent on the PDCCH and transmit the second information on the scheduled PUSCH resource.

In some embodiments, the PDCCH sent by the target cell may be transmitted after a first time elapses following a receipt of fifth information from the serving cell.

In some embodiments, the first time may be understood as an offset time of the target cell sending the PDCCH relative to the target cell receiving the fifth information from the serving cell.

For example, the first time may be the same as the aforementioned time offset.

For another example, the first time may be specified by the protocol. Upon receiving the fifth information from the serving cell, the target cell may determine that the terminal accesses the target cell. However, considering that the terminal requires a certain period to complete the preparation work for accessing, the target cell sends the PDCCH after the first time elapses to ensure that the terminal has finished the preparation for the cell switch. This facilitates the terminal to accurately receive the PDCCH and transmit corresponding data (e.g., the second information) based on the PUSCH resource scheduled by the PDCCH.

In some embodiments, in a case where the first resource includes the PUSCH resource scheduled based on the PDCCH sent by the target cell, the terminal may further send the sixth information to the serving cell and/or the target cell. The sixth information includes the first time, which is used to inform the network device of a period required by the terminal to complete the preparation work for the cell switch. The target cell may start sending the PDCCH after receiving the fifth information from the serving cell and the first time elapses.

For example, the terminal may report the sixth information (e.g., capability information) to inform the network device of a minimum preparation time for the cell switch (e.g., the first time) required by the terminal. The terminal may inform the target cell via the serving cell, for example, the terminal sends the sixth information to the serving cell, and the serving cell then forwards the sixth information to the target cell.

In some embodiments, the first resource may include at least one of: the SR resource corresponding to the target cell; the CG PUSCH resource of the target cell; the SRS resource corresponding to the target cell; the PUSCH resource of the target cell scheduled by the first information; or the PUSCH resource scheduled based on the PDCCH sent by the target cell.

It is to be understood that the first network device and the second network device involved in the foregoing embodiments may be collectively referred to as a network device.

The uplink communication method involved in the embodiments of the disclosure may include at least one of steps S2101 to S2102.

In some embodiments, step S2101 is optional, and one or more of these steps may be omitted or replaced in different embodiments.

In some embodiments, reference may be made to other implementations described before or after the specification corresponding to FIG. 2.

FIG. 3 is a flowchart of an uplink communication method according to an embodiment. As shown in FIG. 3, the embodiment of the disclosure relates to a random access method, which may be performed by a terminal. The method includes the following steps.

At step S3101, first information is obtained.

For implementations of step S3101, reference may be made to the implementations of step S2101 in FIG. 2 and other relevant parts in the embodiments related to FIG. 2, and details are not described herein again.

In some embodiments, the terminal obtains the first information specified by a protocol.

In some embodiments, the terminal obtains the first information from a higher layer.

In some embodiments, the terminal obtains the first information via performing a processing.

In some embodiments, step S3101 is omitted, and the terminal independently implements the function indicated by the first information, or the aforementioned function is default.

At step S3102, second information is sent based on a first resource.

For implementations of step S3102, reference may be made to the implementations of step S2102 in FIG. 2 and other relevant parts in the embodiments related to FIG. 2, and details are not described herein again.

In some embodiments, the first resource includes at least one of: an SR resource corresponding to the target cell; a CG PUSCH resource of the target cell; a semi-persistent SRS resource corresponding to the target cell; a PUSCH resource of the target cell scheduled by the first information; or a PUSCH resource scheduled based on a PDCCH sent by the target cell.

In some embodiments, the method further includes: receiving third information, in which the third information is used to configure the first resource, and the first resource is the SR resource corresponding to the target cell.

In some embodiments, the first information is further used to configure and activate the CG PUSCH resource.

In some embodiments, the first information is further used to activate the CG PUSCH resource, and the method further includes: receiving fourth information, in which the fourth information is used to configure the CG PUSCH resource.

In some embodiments, a starting time-domain position of the first resource is determined based on a time-domain offset and a time-domain position at which the first information is received, in which the first resource is the PUSCH resource of the target cell scheduled by the first information.

In some embodiments, the time-domain offset is determined based on at least one of: a predefined rule; or being configured by a network device, in which the network device includes a network device corresponding to the serving cell.

In some embodiments, the PDCCH is sent by the target cell after receiving fifth information from the serving cell, in which the fifth information indicates that the terminal accesses the target cell.

In some embodiments, the PDCCH is sent by the target cell after a first time elapses following a receipt of fifth information from the serving cell, where the fifth information indicates that the terminal accesses the target cell.

In some embodiments, the method further includes: reporting sixth information, in which the sixth information indicates the first time. The first time is an offset time required for the target cell to send the PDCCH.

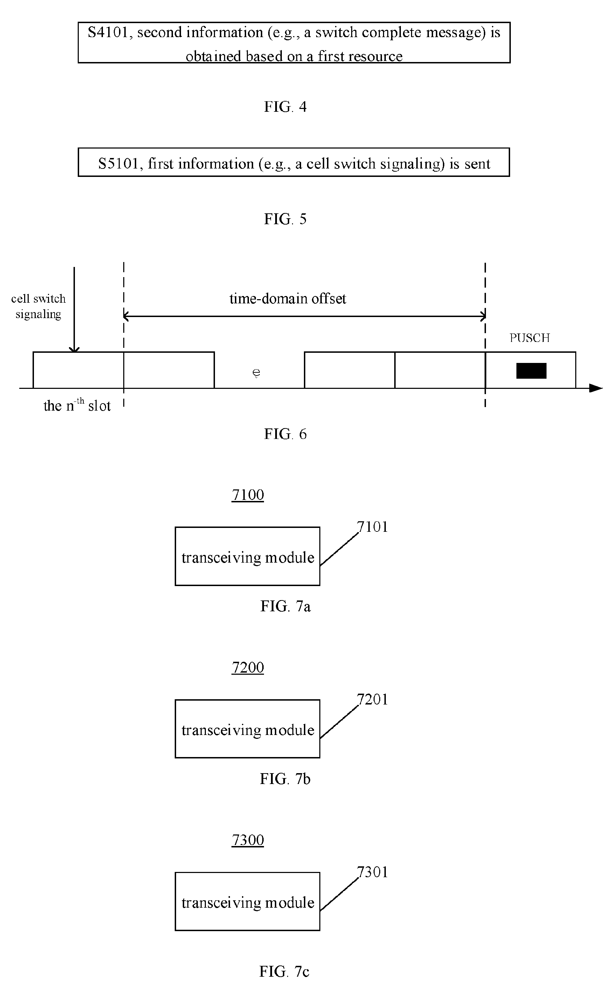

FIG. 4 is a flowchart of an uplink communication method according to another embodiment. As shown in FIG. 4, the embodiment of the disclosure relates to a random access method, which may be performed by a first network device. The first network device may be a network device corresponding to a target cell. The method includes the following steps.

At step S4101, second information is obtained based on a first resource.

For implementations of step S4101, reference may be made to the implementations of step S2101 in FIG. 2, the implementations of step S3102 in FIG. 3, and other relevant parts in the embodiments related to FIG. 2 and FIG. 3, and details are not described herein again.

In some embodiments, the first network device obtains the second information specified by a protocol.

In some embodiments, the first network device obtains the second information from a higher layer.

In some embodiments, the first network device obtains the second information via performing a processing.

In some embodiments, the first resource includes at least one of: an SR resource corresponding to the target cell; a CG PUSCH resource of the target cell; a semi-persistent SRS resource corresponding to the target cell; a PUSCH resource of the target cell scheduled by first information; or a PUSCH resource scheduled based on a PDCCH sent by the target cell.

In some embodiments, the SR resource is configured by third information sent by a serving cell.

In some embodiments, the method further includes: receiving fifth information sent by a serving cell, in which the fifth information indicates that the terminal accesses the target cell, and the first resource is configured to receive the second information after the fifth information is received, and/or the first resource is configured for communication between other devices and the target cell before the fifth information is received, in which the first resource is the SR resource corresponding to the target cell.

In some embodiments, the CG PUSCH resource is configured and activated by the first information sent by a serving cell.

In some embodiments, the CG PUSCH resource is configured by fourth information sent by a serving cell and activated by the first information sent by the serving cell.

In some embodiments, a starting time-domain position of the first resource is determined based on a time-domain offset and a time-domain position at which the terminal receives the first information, the first resource is the PUSCH resource of the target cell scheduled by the first information, and the first information is sent by a serving cell.

In some embodiments, the time-domain offset is determined based on at least one of: a predefined rule; or being configured by a network device, in which the network device includes a network device corresponding to the serving cell.

In some embodiments, the method further includes: receiving fifth information sent by a serving cell; and sending the PDCCH, in which the fifth information indicates that the terminal accesses the target cell.

In some embodiments, the method further includes: receiving fifth information sent by a serving cell; sending the PDCCH after a first time elapses, in which the fifth information indicates that the terminal accesses the target cell.

In some embodiments, the method further includes: receiving sixth information, in which the sixth information indicates the first time. The first time is an offset time required for the target cell to send the PDCCH.

FIG. 5 is a flowchart of an uplink communication method according to yet another embodiment. As shown in FIG. 5, the embodiment of the disclosure relates to a random access method, which may be performed by a second network device. The first network device may be a network device corresponding to a serving cell. The method includes the following steps.

At step S5101, first information is sent.

For implementations of step S5101, reference may be made to the implementations of step S2101 in FIG. 2, the implementations of step S3101 in FIG. 3, and other relevant parts in the embodiments related to FIG. 2 and FIG. 3, and details are not described herein again.

In some embodiments, the first resource includes at least one of: an SR resource corresponding to the target cell; a CG PUSCH resource of the target cell; a semi-persistent SRS resource corresponding to the target cell; a PUSCH resource of the target cell scheduled by first information; or a PUSCH resource scheduled based on a PDCCH sent by the target cell.

In some embodiments, the method further includes: sending third information, in which the third information is used to configure the first resource, and the first resource is the SR resource corresponding to the target cell.

In some embodiments, the method further includes: sending fifth information to the target cell, in which the fifth information indicates that the terminal accesses the target cell, and the first resource is configured to receive the second information after the fifth information is received, and/or the first resource is configured for communication between other devices and the target cell before the fifth information is received, in which the first resource is the SR resource corresponding to the target cell.

In some embodiments, the CG PUSCH resource is configured and activated via the first information.

In some embodiments, the CG PUSCH resource is activated by the first information, and the method further includes: sending fourth information, in which the fourth information is used to configure the CG PUSCH resource.

In some embodiments, a starting time-domain position of the first resource is determined based on a time-domain offset and a time-domain position at which the terminal receives the first information, and the first resource is the PUSCH resource of the target cell scheduled by the first information.

In some embodiments, the time-domain offset is determined based on at least one of: a predefined rule; or being configured by a network device, in which the network device includes a network device corresponding to the serving cell.

In some embodiments, the method further includes: sending fifth information to the target cell, in which the fifth information indicates that the terminal accesses the target cell, and the PDCCH is sent by the target cell after receiving the fifth information from the serving cell.

In some embodiments, the method further includes: sending fifth information to the target cell, in which the fifth information indicates that the terminal accesses the target cell, and the PDCCH is sent by the target cell after a first time elapses following a receipt of the fifth information from the serving cell.

In some embodiments, the method further includes: receiving sixth information, in which the sixth information indicates the first time, and the first time is an offset time required for the target cell to send the PDCCH; and forwarding the sixth information to the target cell.

Next, the disclosure will describe the foregoing solution with more detailed embodiments.

Mode 1: Pre-allocate resources for a UE. After the UE completes preparation, the UE actively sends a confirmation message to the target cell.

Option 1: Reserve the PUCCH resource of the target cell for the UE.

In some embodiments, an SR is pre-configured for the UE, and the SR is associated with a PUCCH resource. After the UE receives a cell switch command and completes preparation, the UE sends the SR to the target cell to request a resource for uploading a complete message, or directly feeds back to the target cell that the UE accesses the target cell via the SR.

In some embodiments, to avoid resource waste, the target cell may start receiving the SR on the corresponding PUCCH only after receiving interaction information from a source cell and confirming that a UE needs to switch to this cell; prior to this, these resources may be allocated to other UEs for use.

Option 2: Allocate the CG PUSCH resource for the UE.

In some embodiments, CG Type 2 is referred to. CG Type 2 PUSCH of candidate cells is pre-configured for the UE in advance, then activated by the serving cell via a cell switch command, and the specific time-frequency resource is indicated in the cell switch command. After switch to the target cell, deactivation is performed by the target cell via DCI.

In some embodiments, a resource configuration mode of CG Type 1 is referred to, but an activation mechanism similar to an activation mechanism of CG Type 2 is adopted. That is, a time-frequency resource is configured via RRC, and activation is performed via the cell switch command. After switch to the target cell, deactivation is performed by the target cell.

Option 3: Activate the semi-persistent SRS resource configured by the candidate cell for the UE via a cell switch command. After the UE is ready, the UE starts sending an SRS. When the candidate cell receives the SRS, the candidate cell indicates that the UE may access, and then UL or DL scheduling may be initiated.

Option 4: Include scheduling information in a cell switch command, and additionally introduce a time interval T into a scheduling timing.

In some embodiments, the scheduling information includes at least: TimeDomainResourceAllocation; Frequency domain resource (optional); or FrequencyDomainResourceAssignment.

In some embodiments, a transmission timing: an additional length T/offset is added, which may be fixed by a protocol or configured by the network based on UE capabilities.

As shown in FIG. 6, the terminal sends the PUSCH in the first slot after a time-domain offset elapses from the $n^{th}$ slot. In FIG. 6, the resource for sending the PUSCH in the first slot may be part of the resources in that slot. Of course, the PUSCH resource may also be a complete time-frequency resource corresponding to the first slot, which is not limited in the disclosure.

In the embodiments of the disclosure, each step may be implemented as an independent embodiment. Some or all of the steps and their optional implementations may be arbitrarily combined with some or all of the steps in other embodiments, and may also be arbitrarily combined with the optional implementations of other embodiments.

The embodiments of the disclosure further provide an apparatus for implementing any of the foregoing methods.

For example, an uplink communication apparatus is provided, where the uplink communication apparatus includes units or modules configured to implement each step performed by a first device (e.g., a terminal, an access network device, a core network function node, a core network device, etc.) in any of the foregoing methods. For another example, another uplink communication apparatus is provided, including units or modules configured to implement each step performed by a second device (e.g., a terminal, an access network device, a core network function node, a core network device, etc.) in any of the foregoing methods.

It should be understood that the division of units or modules in the above apparatus is merely a logical function division. In actual implementation, all or part of units or modules may be integrated into a single physical entity, or may be physically separated. In addition, the units or modules in the apparatus may be implemented in the form of a processor invoking software: for example, the apparatus includes a processor connected to a memory, where instructions are stored in the memory, and the processor invokes the instructions stored in the memory to implement any of the above methods or the functions of each unit or module of the above apparatus. The processor may be a general-purpose processor, such as a central processing unit (CPU) or a microprocessor, and the memory may be an internal memory of the apparatus or an external memory of the apparatus. Alternatively, the units or modules in the apparatus may be implemented in the form of hardware circuits, and the functions of some or all units or modules may be implemented through the design of hardware circuits. The above hardware circuits may be understood as one or more processors; for example, in one implementation, the hardware circuits are application-specific integrated circuits (ASICs), and the functions of some or all of the above units or modules are implemented through the design of logical relationships between components in the circuits; for another example, in another implementation, the hardware circuits may be implemented through programmable logic devices (PLDs). Taking field programmable gate arrays (FPGAs) as an example, they may include a large number of logic gate circuits, and the connection relationships between the logic gate circuits are configured through configuration files to implement the functions of some or all of the above units or modules. All units or modules of the above apparatus may be fully implemented in the form of a processor invoking software, fully implemented in the form of hardware circuits, or partially implemented in the form of a processor invoking software and the remaining part implemented in the form of hardware circuits.

In the embodiments of the disclosure, the processor is a circuit with signal processing capability. In one implementation, the processor may be a circuit with instruction reading and running capabilities, such as a CPU, a microprocessor, a graphics processing unit (GPU) (which may be understood as a microprocessor), or a digital signal processor (DSP). In another implementation, the processor may implement certain functions through the logical relationship of hardware circuits, where the logical relationship of the hardware circuits is fixed or reconfigurable. For example, the processor is a hardware circuit implemented by an application-specific integrated circuit (ASIC) or a programmable logic device (PLD), such as an FPGA. In a reconfigurable hardware circuit, the process in which the processor loads a configuration file to implement hardware circuit configuration may be understood as the process in which the processor loads instructions to implement the functions of some or all of the above units or modules. In addition, the processor may also be a hardware circuit designed for artificial intelligence, which may be understood as an ASIC, such as a neural network processing unit (NPU), a tensor processing unit (TPU), or a deep learning processing unit (DPU).

FIG. 7a is a schematic diagram of an uplink communication apparatus according to an embodiment. As shown in FIG. 7a, an uplink communication apparatus 7100 may be, for example, the aforementioned terminal. The uplink communication apparatus 7100 includes a transceiving module 7101. Of course, the uplink communication apparatus 7100 may further include any possible modules such as a processing module, which is not limited in the disclosure. In some embodiments, the aforementioned transceiving module 7101 is configured to receive the first information. In some embodiments, the aforementioned transceiving module 7101 is configured to perform at least one of the communication steps such as sending and/or receiving performed by the terminal in any of the foregoing methods, including step S2101 and step S2102, but is not limited thereto, and details are not described herein again.

FIG. 7b is a schematic diagram of an uplink communication apparatus according to another embodiment. As shown in FIG. 7b, an uplink communication apparatus 7200 may be, for example, the aforementioned first network device, and the apparatus 7200 includes a transceiving module 7201. Of course, the uplink communication apparatus 7200 may further include any possible modules such as a processing module, which is not limited in the disclosure. In some embodiments, the aforementioned transceiving module 7201 is configured to receive the second information. In some embodiments, the aforementioned transceiving module 7201 is configured to perform communication steps such as sending and/or receiving performed by the second device in any of the foregoing methods, including step S2102, but is not limited thereto, and details are not described herein again.

FIG. 7c is a schematic diagram of an uplink communication apparatus according to yet another embodiment. As shown in FIG. 7c, an uplink communication apparatus 7300 may be, for example, the aforementioned second network device, and the apparatus 7300 includes a transceiving module 7301. Of course, the uplink communication apparatus 7300 may further include any possible modules such as a processing module, which is not limited in the disclosure. In some embodiments, the aforementioned transceiving module 7301 is configured to send the first information. In some embodiments, the aforementioned transceiving module 7301 is configured to perform communication steps such as sending and/or receiving performed by the second network device in any of the foregoing methods, including step S2101, but is not limited thereto, and details are not described herein again.

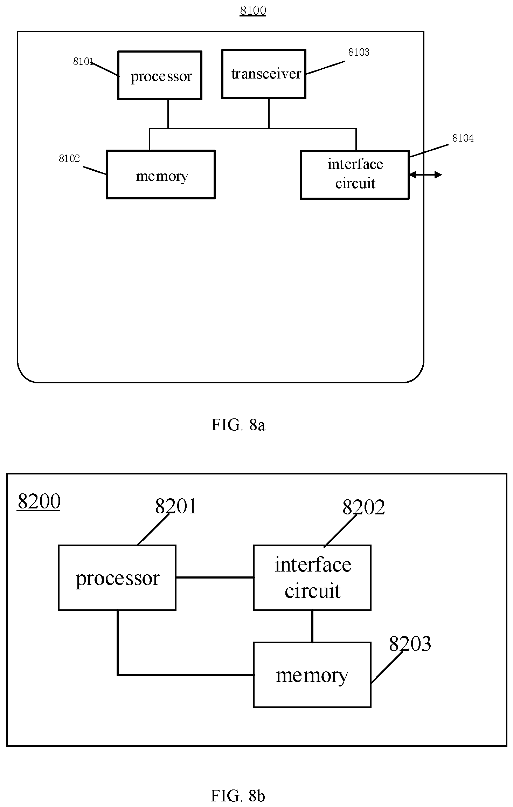

FIG. 8a is a schematic diagram of a communication device 8100 proposed in an embodiment of the disclosure. The communication device 8100 may be a network device (e.g., an access network device, a core network device, etc.), a terminal (e.g., a UE, etc.), a chip, a chip system, or a processor that supports the network device to implement any of the above methods, or a chip, a chip system, or a processor that supports the terminal to implement any of the above methods. The communication device 8100 may be configured to implement the methods described in the above method embodiments, and specific reference may be made to the descriptions in the above method embodiments.

As shown in FIG. 8a, the communication device 8100 includes one or more processors 8101. The processor 8101 may be a general-purpose processor or a special-purpose processor, such as a baseband processor or a central processing unit. The baseband processor may be configured to process communication protocols and communication data, and the central processing unit may be configured to control the communication device (e.g., a base station, a baseband chip, a terminal device, a terminal device chip, a DU, or a CU), execute programs, and process program data. The processor 8101 is configured to invoke instructions to cause the communication device 8100 to execute any of the above methods.

In some embodiments, the communication device 8100 further includes one or more memories 8102 for storing instructions. In some embodiments, all or part of the memory 8102 may also be located outside the communication device 8100.

In some embodiments, the communication device 8100 further includes one or more transceivers 8103. When the communication device 8100 includes one or more transceivers 8103, the transceivers 8103 perform at least one of the communication steps such as sending and/or receiving in the foregoing methods, including step S2101 and step S2102, but are not limited thereto. The processor 8101 performs other steps, but is not limited thereto.

In some embodiments, the transceiver may include a receiver and a transmitter, which may be separate or integrated. In some embodiments, terms such as transceiver, transceiver unit, transceiver machine, and transceiver circuit may be replaced with each other, and terms such as transmitter, transmission unit, transmitter machine, and transmission circuit may be replaced with each other, and terms such as receiver, receiving unit, receiver machine, and receiving circuit may be replaced with each other.

In some embodiments, the communication device 8100 further includes one or more interface circuits 8104. In some embodiments, the one or more interface circuits 8104 are connected to the memory 8102. The interface circuit 8104 may be configured to receive signals from the memory 8102 or other apparatuses, and may be configured to send signals to the memory 8102 or other apparatuses. For example, the interface circuit 8104 may read instructions stored in the memory 8102 and send the instructions to the processor 8101.

The communication device 8100 described in the above embodiments may be a network device or a terminal, but the scope of the communication device 8100 described in the disclosure is not limited thereto, and the structure of the communication device 8100 may not be limited by FIG. 8a. The communication device may be an independent device or part of a larger device. For example, the communication device may be: 1) an independent integrated circuit (IC), a chip, or a chip system or subsystem; (2) a collection of one or more ICs, in some embodiments, the above IC collection may also include a storage component for storing data and programs; (3) an ASIC, such as a modem; (4) a module embeddable in other devices; (5) a receiver, a terminal device, an intelligent terminal device, a cellular phone, a wireless device, a handheld device, a mobile unit, a vehicle-mounted device, a network device, a cloud device, an artificial intelligence device, etc.; (6) others.

FIG. 8b is a schematic diagram of a chip 8200 proposed in an embodiment of the disclosure. When the communication device 8100 is a chip or a chip system, reference may be made to the schematic diagram of the chip 8200 shown in FIG. 8b, but it is not limited thereto.

The chip 8200 includes one or more processors 8201, and the chip 8200 is configured to execute any of the above methods.

In some embodiments, the chip 8200 further includes one or more interface circuits 8202. In some embodiments, the one or more interface circuits 8202 are connected to a memory 8203. The interface circuit 8202 may be configured to receive signals from the memory 8203 or other apparatuses, and may be configured to send signals to the memory 8203 or other apparatuses. For example, the interface circuit 8202 may read instructions stored in the memory 8203 and send the instructions to the processor 8201.

In some embodiments, the interface circuit 8202 performs at least one of the communication steps such as sending and/or receiving in the aforementioned methods, including step S2101 and step S2102, but is not limited thereto. The processor 8201 performs other steps, but is not limited thereto.

In some embodiments, terms such as interface circuit, interface, transceiver pin, and transceiver may be replaced with each other.

In some embodiments, the chip 8200 further includes one or more memories 8203 for storing instructions. In some embodiments, all or part of the memory 8203 may be located outside the chip 8200.

The disclosure further provides a storage medium on which instructions are stored. When the instructions are run on the communication device 8100, the communication device 8100 is caused to execute any of the above methods. In some embodiments, the storage medium is an electronic storage medium. In some embodiments, the storage medium is a computer-readable storage medium, but it is not limited thereto, and may also be a storage medium readable by other devices. In some embodiments, the storage medium is a non-transitory storage medium, but it is not limited thereto, and may also be a transitory storage medium.

The disclosure further provides a program product. When the program product is executed by the communication device 8100, the communication device 8100 is caused to execute any of the above methods. In some embodiments, the program product is a computer program product.

The disclosure further provides a computer program which, when run on a computer, causes the computer to execute any of the above methods.

The disclosure provides a method for allocating/scheduling a target cell resource for a user, which is used to send a switch complete message to a target cell, so as to support the deployment of RACH-less cell switch. This further reduces switch latency and enables the user to access the target cell as soon as possible.

**Claims**

1. An uplink communication method, comprising:

   receiving first information sent by a serving cell, wherein the first information is configured to instruct a terminal to access a target cell; and
   sending second information based on a first resource, wherein the second information indicates that the terminal accesses the target cell, and the first resource is a time-frequency resource allocated by the target cell to the terminal for sending the second information.

2. The uplink communication method of claim 1, wherein the first resource comprises at least one of:

   a scheduling request (SR) resource corresponding to the target cell;
   a configured grant (CG) physical uplink shared channel (PUSCH) resource of the target cell;
   a semi-persistent sounding reference signal (SRS) resource corresponding to the target cell;
   a PUSCH resource of the target cell scheduled by the first information; or
   a PUSCH resource scheduled based on a physical downlink control channel (PDCCH) sent by the target cell.

3. The uplink communication method of claim 2, further comprising:
   receiving third information, wherein the third information is used to configure the first resource, and the first resource is the SR resource corresponding to the target cell.

4. The uplink communication method of claim 2, wherein the first information is further used to configure and activate the CG PUSCH resource.

5. The uplink communication method of claim 2, wherein the first information is further used to activate the CG PUSCH resource, and the method further comprises:
   receiving fourth information, wherein the fourth information is used to configure the CG PUSCH resource.

6. The uplink communication method of claim 2, wherein a starting time-domain position of the first resource is determined based on a time-domain offset and a time-domain position at which the first information is received, and the first resource is the PUSCH resource of the target cell scheduled by the first information.

7. The uplink communication method of claim 6, wherein the time-domain offset is determined based on at least one of:

   a predefined rule; or
   being configured by a network device, wherein the network device comprises a network device corresponding to the serving cell.

8. The uplink communication method of claim 2, wherein the PDCCH is sent by the target cell after receiving fifth information from the serving cell, and the fifth information indicates that the terminal accesses the target cell.

9.  The uplink communication method of claim 2 or 8, wherein the PDCCH is sent by the target cell after a first time elapses following a receipt of fifth information from the serving cell, and the fifth information indicates that the terminal accesses the target cell.

10. The uplink communication method of claim 9, further comprising:
    reporting sixth information, wherein the sixth information indicates the first time.

11. An uplink communication method, comprising:
    receiving second information based on a first resource, wherein the second information indicates that a terminal accesses a target cell, and the first resource is a time-frequency resource allocated by the target cell to the terminal for sending the second information.

12. The uplink communication method of claim 11, wherein the first resource comprises at least one of:

    a scheduling request (SR) resource corresponding to the target cell;
    a configured grant (CG) physical uplink shared channel (PUSCH) resource of the target cell;
    a semi-persistent sounding reference signal (SRS) resource corresponding to the target cell;
    a PUSCH resource of the target cell scheduled by first information; or
    a PUSCH resource scheduled based on a physical downlink control channel (PDCCH) sent by the target cell.

13. The uplink communication method of claim 12, wherein the SR resource is configured by third information sent by a serving cell.

14. The uplink communication method of claim 12 or 13, further comprising:
    receiving fifth information sent by a serving cell, wherein the fifth information indicates that the terminal accesses the target cell, and the first resource is configured to receive the second information after the fifth information is received, and/or the first resource is configured for communication between other devices and the target cell before the fifth information is received, wherein the first resource is the SR resource corresponding to the target cell.

15. The uplink communication method of claim 12, wherein the CG PUSCH resource is configured and activated by the first information sent by a serving cell.

16. The uplink communication method of claim 12, wherein the CG PUSCH resource is configured by fourth information sent by a serving cell and activated by the first information sent by the serving cell.

17. The uplink communication method of claim 12, wherein a starting time-domain position of the first resource is determined based on a time-domain offset and a time-domain position at which the terminal receives the first information, the first resource is the PUSCH resource of the target cell scheduled by the first information, and the first information is sent by a serving cell.

18. The uplink communication method of claim 17, wherein the time-domain offset is determined based on at least one of:

    a predefined rule; or
    being configured by a network device, wherein the network device comprises a network device corresponding to the serving cell.

19. The uplink communication method of claim 12, further comprising:

    receiving fifth information sent by a serving cell; and
    sending the PDCCH, wherein the fifth information indicates that the terminal accesses the target cell.

20. The uplink communication method of claim 12, further comprising:

    receiving fifth information sent by a serving cell; and
    sending the PDCCH after a first time elapses, wherein the fifth information indicates that the terminal accesses the target cell.

21. The uplink communication method of claim 20, further comprising:

receiving sixth information, wherein the sixth information indicates the first time.

22. An uplink communication method, comprising:
sending first information to a terminal, wherein the first information is configured to instruct the terminal to access a target cell, second information is transmitted between the terminal and the target cell via a first resource, the second information indicates that the terminal accesses the target cell, and the first resource is a time-frequency resource allocated by the target cell to the terminal for transmitting the second information.

23. The uplink communication method of claim 22, wherein the first resource comprises at least one of:

a scheduling request (SR) resource corresponding to the target cell;
a configured grant (CG) physical uplink shared channel (PUSCH) resource of the target cell;
a semi-persistent sounding reference signal (SRS) resource corresponding to the target cell;
a PUSCH resource of the target cell scheduled by the first information; or
a PUSCH resource scheduled based on a physical downlink control channel (PDCCH) sent by the target cell.

24. The uplink communication method of claim 23, further comprising:
sending third information, wherein the third information is used to configure the first resource, and the first resource is the SR resource corresponding to the target cell.

25. The uplink communication method of claim 24, further comprising:
sending fifth information to the target cell, wherein the fifth information indicates that the terminal accesses the target cell, and the first resource is configured to receive the second information after the fifth information is received, and/or the first resource is configured for communication between other devices and the target cell before the fifth information is received, wherein the first resource is the SR resource corresponding to the target cell.

26. The uplink communication method of claim 23, wherein the CG PUSCH resource is configured and activated via the first information.

27. The uplink communication method of claim 23, wherein the CG PUSCH resource is activated by the first information, and the method further comprises:
sending fourth information, wherein the fourth information is used to configure the CG PUSCH resource.

28. The uplink communication method of claim 24, wherein a starting time-domain position of the first resource is determined based on a time-domain offset and a time-domain position at which the terminal receives the first information, and the first resource is the PUSCH resource of the target cell scheduled by the first information.

29. The uplink communication method of claim 28, wherein the time-domain offset is determined based on at least one of:

a predefined rule; or
being configured by a network device, wherein the network device comprises a network device corresponding to the serving cell.

30. The uplink communication method of claim 23, further comprising:
sending fifth information to the target cell, wherein the fifth information indicates that the terminal accesses the target cell, and the PDCCH is sent by the target cell after receiving the fifth information from a serving cell.

31. The uplink communication method of claim 23, further comprising:
sending fifth information to the target cell, wherein the fifth information indicates that the terminal accesses the target cell, and the PDCCH is sent by the target cell after a first time elapses following a receipt of the fifth information from a serving cell.

32. The uplink communication method of claim 31, further comprising:

receiving sixth information, wherein the sixth information indicates the first time; and
forwarding the sixth information to the target cell.

33. An uplink communication method, comprising:

a serving cell sending first information to a terminal, wherein the first information is configured to instruct the terminal to access a target cell;

the terminal receiving the first information sent by the serving cell;

the terminal sending second information to the target cell based on a first resource, wherein the second information indicates that the terminal accesses the target cell, and the first resource is a time-frequency resource allocated by the target cell to the terminal for sending the second information; and

the target cell receiving the second information based on the first resource.

34. A terminal, comprising:

a transceiving module, configured to receive first information sent by a serving cell, wherein the first information is configured to instruct the terminal to access a target cell,

wherein the transceiving module is further configured to send second information based on a first resource, wherein the second information indicates that the terminal accesses the target cell, and the first resource is a time-frequency resource allocated by the target cell to the terminal for sending the second information.

35. A first network device, comprising:

a transceiving module, configured to receive second information based on a first resource, wherein the second information indicates that a terminal accesses a target cell, and the first resource is a time-frequency resource allocated by the target cell to the terminal for sending the second information.

36. A second network device, comprising:

a transceiving module, configured to send first information to a terminal, wherein the first information is configured to instruct the terminal to access a target cell, second information is transmitted between the terminal and the target cell via a first resource, the second information indicates that the terminal accesses the target cell, and the first resource is a time-frequency resource allocated by the target cell to the terminal for transmitting the second information.

37. A terminal, comprising:

one or more transceivers;

one or more processors; and

one or more memories, configured to store one or more computer programs, wherein the one or more computer programs comprise instructions that, when executed by the one or more processors of the terminal, cause the terminal to perform the uplink communication method according to any one of claims 1 to 10.

38. A first network device, comprising:

one or more transceivers;

one or more processors; and

one or more memories, configured to store one or more computer programs, wherein the one or more computer programs comprise instructions that, when executed by the one or more processors of the first network device, cause the first network device to perform the uplink communication method according to any one of claims 11 to 21.

39. A second network device, comprising:

one or more transceivers;

one or more processors; and

one or more memories, configured to store one or more computer programs, wherein the one or more computer programs comprise instructions that, when executed by the one or more processors of the second network device, cause the second network device to perform the uplink communication method according to any one of claims 22 to 32.

40. A communication system, comprising a terminal, a first network device, and a second network device, wherein the terminal is configured to implement the uplink communication method according to any one of claims 1 to 10, the first network device is configured to implement the uplink communication method according to any one of claims 11 to 21, and the second network device is configured to implement the uplink communication method according to any one of claims 22 to 32.

**41.** A storage medium storing instructions, wherein when the instructions are run on a communication device, the communication device is caused to perform the uplink communication method according to any one of claims 1 to 10, 11 to 21, or 22 to 32.

Communication
system 100

Terminal
101

Network device 102

FIG. 1a

TRP

terminal

cell 2

cell 3

cell 1

cell 4

FIG. 1b

Terminal | Serving cell | Target cell

S1101, pre-configuring a candidate cell parameter

S1102, downlink synchronization

S1103, L1 measurement report

S1104, determining whether to perform the cell switch based on the L1 measurement report

S1105, cell switch signaling

S1106, accessing to the target cell

FIG. 1c

Terminal | Second network device | First network device

S2101, sending first information

(e.g., a cell switch signaling)

S2102, sending second information based on the first resource

(e.g., a switch complete message)

FIG. 2

S3101, first information (e.g., a cell switch signaling) is obtained

S3102, second information (e.g., a switch complete message) is sent based on a first resource

FIG. 3

| S4101, second information (e.g., a switch complete message) is obtained based on a first resource |
| --- |

FIG. 4

| S5101, first information (e.g., a cell switch signaling) is sent |
| --- |

FIG. 5

FIG. 6

7100

| transceiving module | 7101 |
| --- | --- |

FIG. 7a

7200

| transceiving module | 7201 |
| --- | --- |

FIG. 7b

7300

| transceiving module | 7301 |
| --- | --- |

FIG. 7c

8100

FIG. 8a

FIG. 8b

## INTERNATIONAL SEARCH REPORT

| International application No. |
| --- |
| **PCT/CN2023/108763** |

**A. CLASSIFICATION OF SUBJECT MATTER**

H04W 74/04(2009.01)i

According to International Patent Classification (IPC) or to both national classification and IPC

**B. FIELDS SEARCHED**

Minimum documentation searched (classification system followed by classification symbols)

IPC:H04W,H04Q

Documentation searched other than minimum documentation to the extent that such documents are included in the fields searched

Electronic data base consulted during the international search (name of data base and, where practicable, search terms used)

DWPI, ENTXT, CNTXT, CJFD, 3GPP: 切换, 无随机接入, 源, 目标, 小区, 调度请求, 配置调度, 物理上行共享信道, 探测参考信号, switch, RACH-less, source, target, cell, SR, CG, PUSCH, SRS

**C. DOCUMENTS CONSIDERED TO BE RELEVANT**

| Category* | Citation of document, with indication, where appropriate, of the relevant passages | Relevant to claim No. |
| --- | --- | --- |
| X | CN 112312487 A (HUAWEI TECHNOLOGIES CO., LTD.) 02 February 2021 (2021-02-02) description, paragraphs 0167-0503 | 1-41 |
| A | WO 2021169828 A1 (SONY GROUP CORP. et al.) 02 September 2021 (2021-09-02) entire document | 1-41 |
| A | HUAWEI et al. "Discussion on SR Trigger in RACH-less Handover" *3GPP TSG-RAN WG2 Meeting #99, R2-1709503*, 25 August 2017 (2017-08-25), entire document | 1-41 |
| A | WO 2022205034 A1 (APPLE INC. et al.) 06 October 2022 (2022-10-06) entire document | 1-41 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **18 March 2024** | **22 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/108763**

| Patent document cited in search report | | | Publication date (day/month/year) | Patent family member(s) | | | Publication date (day/month/year) |
|---|---|---|---|---|---|---|---|
| CN | 112312487 | A | 02 February 2021 | WO | 2021018283 | A1 | 04 February 2021 |
| WO | 2021169828 | A1 | 02 September 2021 | US | 2023096215 | A1 | 30 March 2023 |
| | | | | EP | 4114083 | A1 | 04 January 2023 |
| | | | | CN | 113382449 | A | 10 September 2021 |
| | | | | CN | 115176503 | A | 11 October 2022 |
| WO | 2022205034 | A1 | 06 October 2022 | CN | 117044292 | A | 10 November 2023 |

Form PCT/ISA/210 (patent family annex) (July 2022)